# EUROPÄISCHE PATENTSCHRIFT

(11) **EP 3 665 066 B1**
(45) Veröffentlichungstag und Bekanntmachung des Hinweises auf die Patenterteilung: **24.02.2021**
(21) Anmeldenummer: 18738254.4
(22) Anmeldetag: 02.07.2018
(51) Int. Cl.: B62D 7/06

(54) **RADAUFHÄNGUNG**
WHEEL SUSPENSION
SUSPENSION DE ROUE

(30) Priorität: 08.08.2017 DE 102017213799
(43) Veröffentlichungstag der Anmeldung: 17.06.2020
(73) Patentinhaber: ZF Friedrichshafen AG, 88046 Friedrichshafen (DE)
(72) Erfinder: KONTERMANN, Peter, 49090 Osnabrück (DE); NEU, Alexander, 88048 Friedrichshafen (DE); PASCH, Andreas, Shanghai 201615 (CN); NORDLOH, Alfons, 49429 Visbek (DE)
(74) Vertreter: ZF Friedrichshafen AG
(86) Internationale Anmeldenummer: PCT/EP2018/067760
(87) Internationale Veröffentlichungsnummer: WO 2019/029909

(56) Entgegenhaltungen:
- EP-A1- 1 900 554
- DE-A1-102009 023 362
- DE-A1-102013 216 029
- DE-A1-102015 209 844
- DE-A1-102015 209 850

## Beschreibung

Die Erfindung betrifft eine Radaufhängung, welche zumindest einen Fahrwerklenker, wenigstens eine erste Spurstange sowie eine zweite Spurtstange, einen Umlenkhebel sowie ein Lagersystem aufweist. Das Lagersystem dient dazu, den Umlenkhebel, welcher die erste Spurstange und die zweite Spurtstange miteinander verbindet, an dem zumindest einen Fahrwerklenker zu lagern.

Die Ausgestaltung einer Radaufhängung an der lenkbaren Achse eines Kraftfahrzeugs bestimmt den realisierbaren Lenkwinkel, wobei bislang Radlenkwinkel bis zu +/- 50° realisiert werden. Der überwiegende Teil bekannter Radaufhängungen setzt einen Lenkwinkel bis zu +/- 40° am kurveninneren Rad um, was mit einer deutlichen Einschränkung des Wendekreises einhergeht.

Um Lenkwinkel oberhalb von +/- 50° zu ermöglichen, nimmt die Komplexität der Fahrwerkskinematik zu, da hierfür zusätzliche Bauteile benötigt werden. Diese zusätzlichen Bauteile stützen sich dabei an der Fahrzeugkarosserie oder den Fahrwerklenkern ab.

Aus der DE 10 2015 209 850 A1 ist eine Radaufhängung bekannt, welche zumindest einen Fahrwerklenker, wenigstens eine erste Spurstange sowie eine zweite Spurtstange sowie einen Umlenkhebel aufweist. Dabei lagert ein Lagersystem den Umlenkhebel, welcher die erste Spurstange und die zweite Spurtstange miteinander verbindet, an dem zumindest einen Fahrwerklenker. Hierzu ist das Lagersystem aus zwei benachbart angeordneten Kegelrollenlagern gebildet, welche von dem Fahrwerklenker in einem dafür ausgebildeten Lagerabschnitt aufgenommen sind, um den Umlenkhebel mittels eines daran angeformten wellenförmigen Abschnitts in den Kegelrollenlagern zu lagern. Der Lagerabschnitt des Fahrwerklenkers bedarf dabei einer besonderen Gestaltung, um die Kegelrollenlager aufzunehmen.

Ausgehend vom vorstehend beschriebenen Stand der Technik ist es nun die Aufgabe der vorliegenden Erfindung, eine Radaufhängung vorzuschlagen, dessen der Lagerung des Umlenkhebels an dem Fahrwerkhebel dienendes Lagersystem sich durch einen einfacheren Aufbau auszeichnet und kostengünstiger ist.

Diese Aufgabe wird durch eine Radaufhängung ausgehend vom Oberbegriff des Anspruchs 1 in Verbindung mit dessen kennzeichnenden Merkmalen gelöst. Die hierauf jeweils folgenden, abhängigen Ansprüche geben jeweils vorteilhafte Weiterbildungen der Erfindung wieder.

Gemäß der Erfindung wird bei einer Radaufhängung, welche zumindest einen Fahrwerklenker, eine erste Spurstange und eine zweite Spurstange sowie einen Umlenkhebel umfasst, der Umlenkhebel, der die erste Spurstange und die zweite Spurstange miteinander verbindet, mittels eines Lagesystems an dem zumindest einen Fahrwerklenker gelagert. Hierbei ist vorgesehen, dass die Lagerung nur genau einen Freiheitsgrad aufweist, nämlich ein Verdrehen der Teile zueinander zu ermöglichen.

Die erfindungsgemäße Radaufhängung weist hierzu ein als Gleitlager ausgebildet Lagersystem auf, welches von einem Lagerabschnitt des zumindest einen Fahrwerklenkers aufgenommen ist, in welchem ein den Umlenkhebel und den zumindest einen Fahrwerklenker verbindendes Verbindungsmittel gelagert ist. Das Lagersystem ist dabei als eine Art Scharnier ausgebildet, welches die auftretenden axialen und radialen Kräfte sowie Momente abstützt. Das Gleitlager weist nur den einen erforderlichen Freiheitsgrad auf, welches nur ein Verdrehen der miteinander verbundenen Teile ermöglicht. Im Vergleich zu einem Wälzlager weist das Gleitlager weniger sich bewegende Bauteile auf und ist daher kostengünstiger herstellbar. Zudem wird durch das Vorsehen eines separaten Verbindungsmittels, das den Fahrwerklenker mit dem Umlenkhebel verbindet, die Herstellung des Umlenkhebels vereinfacht. Das Lagersystem weist des Weiteren ein geringes Losbrechmoment auf und ist mit Blick auf den nur beschränkt vorhandenen Bauraum der Radaufhängung vorteilhaft ausgestaltet.

Das bei dem Lagersystem der DE 10 2015 209 850 A1 zur Anwendung kommende, zwei Kegelrollenlager umfassende Lagersystem ist wegen der zu deren Anordnung erforderlichen Ausgestaltung des Fahrwerklenkers und des Umlenkhebels aufwendiger und durch die Verwendung von Wälzlagern kostenintensiver.

Entsprechend einer Ausführungsform der Erfindung kann das Gleitlager eine zweiteilige Lagerbuchse mit einem ersten und einem zweiten Lagerbuchsenteil umfassen. Die beiden Lagerbuchsenteile können in einer zur Längsachse des zumindest einen Fahrwerklenkers geneigt verlaufenden Durchgangsbohrung in dem Lagerabschnitt angeordnet sein.

Besonders bevorzugt können das erste und das zweite Lagerbuchsenteil gegeneinander vorgespannt sein.

Hierzu können das erste und das zweite Lagerbuchsenteil jeweils an je einem Ende einen jeweils sich radial nach außen erstreckenden Abschnitt aufweisen, der an je einem Absatz im Lagerabschnitt anliegt. Die Anordnung der Lagerbuchsenteile in der Durchgangsbohrung erfolgt in der Weise, dass die sich radial nach außen erstreckenden Abschnitte des jeweiligen Lagerbuchsenteils einander abgewandt positioniert sind. Der Absatz wird durch eine sprunghafte Durchmesserzunahme der Durchgangsbohrung realisiert. Zur Vorspannung der in die Durchgangsbohrung eingebrachten Lagerbuchsenteile kann ein jeweils die Durchgangsbohrung begrenzender Wandabschnitt des Lagerabschnitts des Fahrwerklenkers abschnittsweise nach innen umgerollt bzw. umgebogen werden. Dadurch, dass der jeweilige umgerollte Wandabschnitt den sich radial nach außen erstreckende Abschnitt des jeweiligen Lagerbuchsenteils überlappt, werden diese in axialer Richtung gesichert. Zudem lässt sich dadurch eine Vorspannung der Lagerbuchsenteile erzeugen.

Gemäß einer Ausführungsform kann die Lagerbuchse aus einem thermoplastischen Kunststoff bestehen. Thermoplastische Kunststoffe können sich durch einen niedrigen Reibungskoeffizienten sowie eine hohe Verschleißfestigkeit auszeichnen. Zur Herstellung der Lagerbuchse kann beispielsweise Polyethylen (PE) oder Polyoximethylen (POM) als Kunststoff Anwendung kommen. Dabei lassen sich das erste und das zweite Lagerbuchsenteil als Kunststoffhalbzeuge für den nachfolgenden Montageprozess bereitstellen.

Entsprechend einer Ausführungsform der Erfindung kann das Verbindungsmittel eine Hülse umfassen, die auf ihrer äußeren Mantelfläche einen im Wesentlichen mittig angeordneten umlaufenden Absatz aufweist, sowie eine durch die Hülse hindurchführbare Sicherungsschraube. An dem umlaufenden Absatz der Hülse können das erste Lagerbuchsenteil und das zweite Lagerbuchsenteil endseitig anliegen. Dies sollte spielfrei erfolgen. Durch den Absatz sind von der Hülse aufgenommene axiale Kräfte auf das erste Lagerbuchsenteil und das zweite Lagerbuchsenteil übertragbar. Mittels der durch die Hülse hindurchführbaren Sicherungsschraube lassen sich der Umlenkhebel und der Fahrwerklenker miteinander verbinden. Hierzu weist der Umlenkhebel insbesondere eine mit dem Gewindeabschnitt der Sicherungsschraube korrespondierende Gewindebohrung auf. Die Sicherungsschraube verhindert eine axiale Bewegung der Hülse relativ zum Lagerabschnitt des Fahrwerklenkers.

Gemäß einer weiteren Ausführungsform kann das Verbindungsmittel einteilig ausgeführt sein, wobei es ein Lagersegment und ein Verbindungssegment aufweist. Das Lagersegment wird zwischen dem ersten und dem zweiten Lagerbuchsenteil angeordnet. Dabei kann das Lagersegment ebenfalls auf seiner äußeren Mantelfläche einen im Wesentlichen mittig angeordneten umlaufenden Absatz aufweisen, an welchem sich das erste und das zweite Lagerbuchsenteil abstützen, um axiale Kräfte aufzunehmen.

Gemäß einer weiteren Ausführungsform kann das Lagersegment einen im Wesentlichen flanschförmigen Abschnitt aufweisen, welches abschnittsweise an einem sich radial nach außen erstreckenden Abschnitt des ersten Lagerbuchsenteils anliegt. Hierdurch kann die Ausgestaltung des Lagerabschnitts des Fahrwerklenkers vereinfacht werden, wenn sich der sich radial nach außen erstreckenden Abschnitt des ersten Lagerbuchsenteils auf der Oberfläche des Fahrwerklenkers abstützt. Dadurch kann auf eine Ausnehmung im Lagerabschnitt sowie das Umrollen oder Umbiegen des Wandabschnitts verzichtet werden.

Weiterhin kann auf das Lagersegment auf seiner dem im Wesentlichen flanschförmigen Abschnitt abgewandten Seite ein im Wesentlichen ringförmiges Element aufbringbar sein, welches an dem sich radial nach außen erstreckenden Abschnitt des zweiten Lagerbuchsenteils anliegt. Zur Sicherung des ringförmigen Elementes gegen eine Bewegung in axialer Richtung kann ein Sprengring auf das Verbindungselement aufbringbar sein. Denkbar ist auch ein alternatives selbstsicherndes Sicherungsmittel. Das Verbindungssegment weist einen Außengewindeabschnitt auf, welcher bevorzugt mit einem korrespondierenden Innengewindeabschnitt im Umlenkhebel verbindbar ist. Hierzu kann das Lagersegment abschnittsweise hohlzylindrisch ausgeführt sein und eine Werkzeugeingriffsausnehmung aufweisen. Der erste und der zweite Lagerbuchsenteil werden bei dieser Ausführungsform durch das Verbindungsmittel und das ringförmige Element vorgespannt.

Die Bezugnahme der Ansprüche auf die Zeichnungen durch Verwendung von Bezugszeichen soll den Schutzumfang der Ansprüche nicht beschränken.

Vorteilhafte Ausführungsformen der Erfindung, die nachfolgend erläutert werden, sind in den Zeichnungen dargestellt. Es zeigt:
- Fig. 1: eine schematische Darstellung einer Radaufhängung mit einem Lagersystem;
- Fig. 2: eine Schnittansicht entlang der Linie A-A gemäß Fig. 1; und
- Fig. 3: eine schematische Ansicht eines Lagersystems gemäß einer zweiten Ausführungsform.

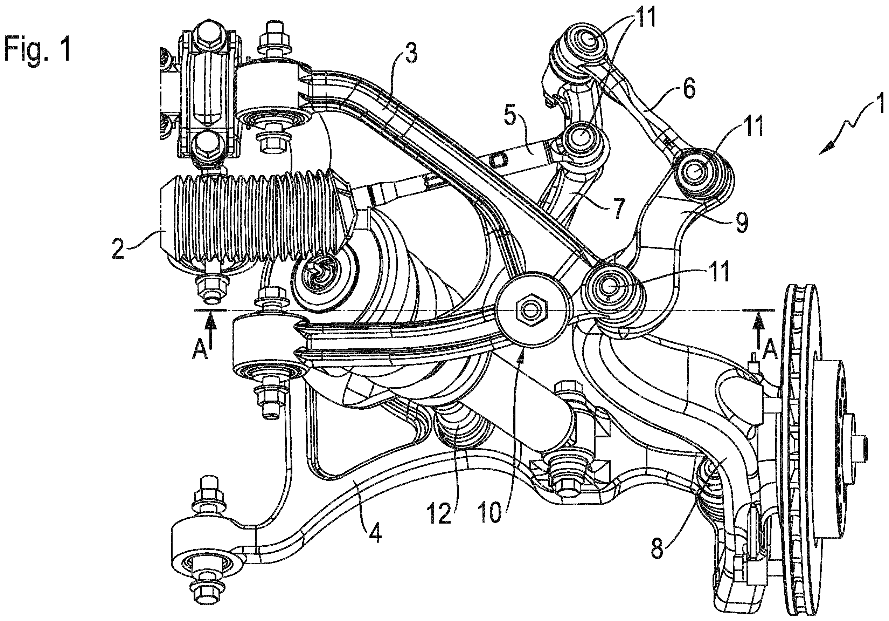

In Fig. 1 ist eine schematische Darstellung einer Radaufhängung 1 mit einem Lagersystem 10 dargestellt. Die Radaufhängung 1 weist ein als ein Zahnstangenmechanismus ausgebildetes Lenkgetriebe 2 auf. Weiterhin umfasst die Radaufhängung 1 einen oberen Fahrwerklenker 3 sowie einen unteren Fahrwerklenker 4, welche als Dreiecksquerlenker ausgeformt sind, eine erste Spurstange 5, eine zweite Spurstange 6, einen Umlenkhebel 7, einen Radträger 8 sowie ein Anlenkabschnitt 9. Der obere Fahrwerklenker 3 sowie der untere Fahrwerklenker 4 können auch als aufgelöster Dreiecksquerlenker ausgebildet sein.

Die erste Spurstange 5 ist mit dem Lenkgetriebe 2 sowie durch eine gelenkige Verbindung 11 mit dem Umlenkhebel 7 verbunden. Der Umlenkhebel 7 ist an einem Ende durch eine gelenkige Verbindung 11 mit der zweiten Spurstange 6 verbunden. Mit einem anderen Ende ist der Umlenkhebel 7 mittels des Lagersystems 10 an dem oberen Fahrwerklenker 3 gelagert. Die gelenkige Verbindung 11, welche die erste Spurstange 5 mit dem Umlenkhebel 7 verbindet, ist zwischen dem Lagersystem 10 und der gelenkige Verbindung 11 der zweite Spurstange 6 angeordnet. Die zweite Spurstange 6 ist mittels einer gelenkigen Verbindung 11 mit dem Anlenkabschnitt 9 verbunden. Der Radträger 8 und der Anlenkabschnitt 9 sind einstückig ausgeformt. Der Radträger 8 ist durch jeweils eine gelenkige Verbindung 11 mit dem oberen Fahrwerklenker 3 sowie dem unteren Fahrwerklenker 4 verbunden. An dem unteren Fahrwerklenker 4 ist ein Federdämpfer 12 angeordnet.

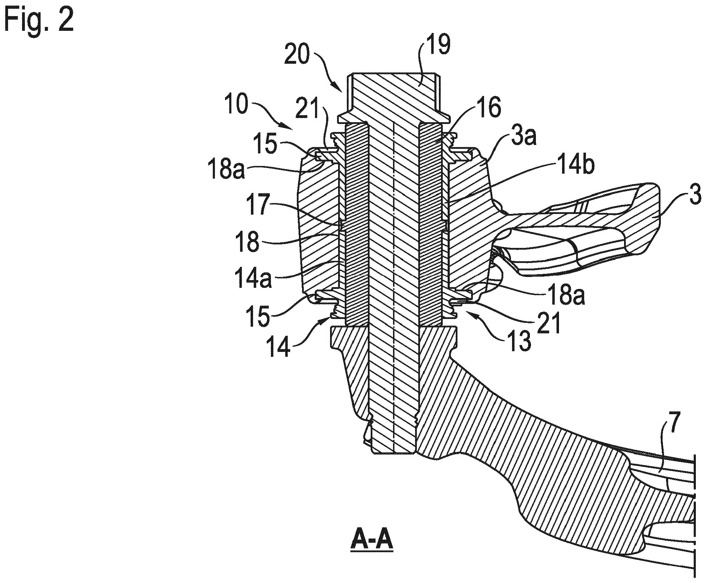

In Fig. 2 ist eine Schnittansicht entlang der Linie A-A gemäß Fig. 1 dargestellt. Diese Ansicht zeigt das Lagersystem 10 gemäß einer ersten Ausführungsform. Das Lagersystem 10, welches den Umlenkhebel 7 an dem oberen Fahrwerklenker 3 lagert, weist genau einen Freiheitsgrad auf. Hierzu ist das Lagersystem 10 als ein Gleitlager 13 ausgebildet. Das Gleitlager 13 umfasst eine zweiteilige Lagerbuchse 14 mit einem ersten Lagerbuchsenteil 14a und einem zweiten Lagerbuchsenteil 14b. Das erste Lagerbuchsenteil 14a und das zweite Lagerbuchsenteil 14b sind von einer sich durch den oberen Fahrwerklenker 3 erstreckenden Durchgangsbohrung 18 aufgenommen. Die Durchgangsbohrung 18 weist endseitig jeweils eine sprunghafte Durchmesserzunahme auf, so dass sich jeweils ein Absatz 18a ausbildet. Das erste und das zweite Lagerbuchsenteil 14a, 14b weisen jeweils einen sich in radialer Richtung nach außen erstreckenden Abschnitt 15 auf. Diese Abschnitte 15 liegen in montierter Position auf den jeweils korrespondierenden Absätzen 18a des oberen Fahrwerklenkers 3 spielfrei auf. Die zweiteilige Lagerbuchse 14 besteht aus einem thermoplastischen Kunststoff, der sich durch einen niedrigen Reibungskoeffizienten sowie eine hohe Verschleißfestigkeit auszeichnet. Hierzu kann beispielsweise Polyethylen (PE) oder Polyoximethylen (POM) als Kunststoff Anwendung finden. Dabei lassen sich das erste und das zweite Lagerbuchsenteil 14a, 14b als Kunststoffhalbzeuge für den nachfolgenden Montageprozess bereitstellen.

In der Lagerbuchse 14 ist ein Verbindungsmittel 20 gelagert, welches den Umlenkhebel 7 und den oberen Fahrwerklenker 3 miteinander verbindet. Das mehrteilige Verbindungsmittel 20 umfasst in der dargestellten Ausführungsform eine Hülse 16 sowie eine Sicherungsschraube 19. Die Hülse16 besteht aus einem Metall, sie kann jedoch auch aus einem Kunststoff hergestellt werden. Auf ihrer äußeren Mantelfläche weist die Hülse 16 einen im Wesentlichen mittig angeordneten umlaufenden Absatz 17 auf. An diesem Absatz 17 der Hülse 16 liegen das erste Lagerbuchsenteil 14a und das zweite Lagerbuchsenteil 14b einander gegenüberliegend angeordnet an. Die Anordnung des ersten Lagerbuchsenteils 14a und des zweiten Lagerbuchsenteils 14b an dem Absatz 17 erfolgt spielfrei. Dadurch sichern das erste und das zweite Lagerbuchsenteil 14a, 14b die Hülse 16 gegen eine axiale Verschiebung. Der umlaufende Absatz 17 auf der äußeren Mantelfläche der Hülse 16 nimmt axiale Kräfte auf bzw. überträgt diese. Mittels der Sicherungsschraube 19 wird der obere Fahrwerklenker 3 mit dem Umlenkhebel 7 verschraubt.

Bei der Montage des Lagersystems 10 wird zunächst eines der beiden Lagerbuchsenteile 14a oder 14b in die Durchgangsbohrung 18 eingeführt. Anschließend wird die Hülse 16 in das bereits in die Durchgangsbohrung 18 eingeführte Lagerbuchsenteil 14a oder 14b eingesetzt. Daraufhin wird das andere Lagerbuchsenteil 14a oder 14b in die Durchgangsbohrung 18 eingesetzt. Zur axialen Fixierung des ersten und des zweiten Lagerbuchsenteils 14a, 14b ist vorgesehen, dass sich axial erstreckende Wandabschnitte 21 des oberen Fahrwerklenkers 3, welche die Durchgangsbohrung 18 jeweils endseitig begrenzen, umgerollt oder umgebogen werden, so dass diese den jeweiligen Abschnitt 15 überlappen. Zudem wird dadurch auf das erste und das zweite Lagerbuchsenteil 14a, 14b jeweils eine Vorspannung aufgebracht. Zur Abdichtung des Lagersystems 10 ist zumindest ein nicht dargestellter Wellendichtring vorgesehen. Der zumindest eine Wellendichtring dichtet das Lagersystem 10, welches den Umlenkhebel 7 an dem oberen Fahrwerklenker 3 lagert, gegenüber der Umgebung ab.

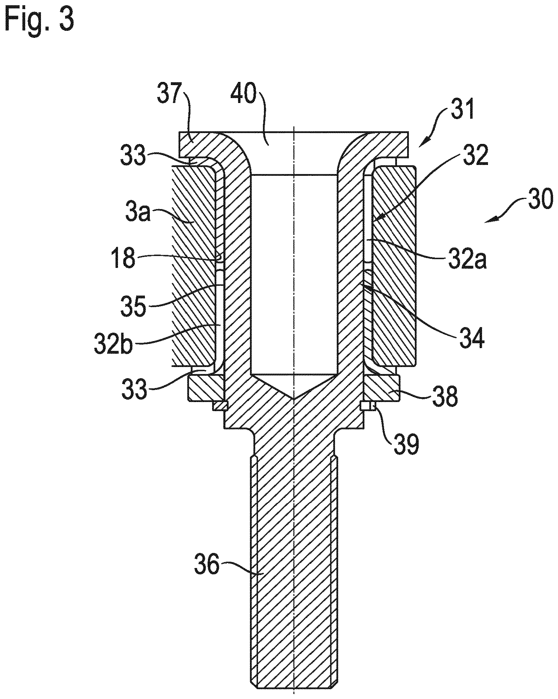

In Fig. 3 ist eine schematische Ansicht eines Lagersystems 30 gemäß einer zweiten Ausführungsform dargestellt. Das Lagersystem 30 ist ebenfalls als ein Gleitlager 31 ausgebildet. Das Gleitlager 31 umfasst eine zweiteilige Lagerbuchse 32 mit einem ersten Lagerbuchsenteil 32a und einem zweiten Lagerbuchsenteil 32b. Das erste Lagerbuchsenteil 32a und zweite Lagerbuchsenteil 32b sind von der sich durch den oberen Fahrwerklenker 3 erstreckenden Durchgangsbohrung 18 aufgenommen. Das erste Lagerbuchsenteil 32a und das zweite Lagerbuchsenteil 32b weisen jeweils an einem Ende je einen sich radial nach außen erstreckenden Abschnitt 33 auf. Mit dem jeweiligen Abschnitt 33 liegen das erste Lagerbuchsenteil 32a und das zweite Lagerbuchsenteil 32b jeweils an dem Fahrwerklenker 3 an.

Zur Verbindung des Fahrwerklenkers 3 und des Umlenkhebels 7 ist in der zweiteiligen Lagerbuchse 32 ein Verbindungsmittel 34 gelagert. Das Verbindungsmittel 34 ist gemäß diesem Ausführungsbeispiel einteilig ausgebildet. Das Verbindungsmittel 34 weist ein Lagersegment 35 und ein Verbindungssegment 36 auf. Das Lagersegment 35 ist abschnittsweise von der Lagerbuchse 32 aufgenommen. Das Lagersegment 35 weist an seinem freien Ende einen flanschförmigen Abschnitt 37 auf, welcher den Abschnitt 33 des ersten Lagerbuchsenteils 32a axial und radial überragt und auf diesem aufliegt. Auf der dem Abschnitt 37 gegenüberliegenden Seite ist ein ringförmiges Element 38 über das Verbindungssegment 36 auf den Lagerabschnitt 35 aufschiebbar. Das ringförmige Element 38 liegt abschnittsweise an dem sich radial nach außen erstreckenden Abschnitt 33 des zweiten Lagerbuchsenteils 32b an. Durch ein auf das Lagersegment 35 aufgebrachtes Sicherungselement, wie ein Sprengring 39, ist das Verbindungsmittel 34 gegen ein axiales Verschieben gesichert. Das Verbindungssegment 36 ist mit einem Außengewinde versehen, so dass das Verbindungsmittel 34 mit dem Umlenkhebel 7 verschraubbar ist. Hierzu ist in dem Lagersegment 35 eine Werkzeugeingriffsausnehmung 40 vorgesehen, so dass das Verbindungsmittel 34 in ein korrespondierendes Innengewinde in dem Umlenkhebel 7 einschraubbar ist.

### Bezugszeichen

- 1: Radaufhängung
- 2: Lenkgetriebe
- 3: Oberer Fahrwerklenker
- 3a: Lagerabschnitt
- 4: Unterer Fahrwerklenker
- 5: Erste Spurstange
- 6: Zweite Spurstange
- 7: Umlenkhebel
- 8: Radträger
- 9: Anlenkabschnitt
- 10: Lagersystem
- 11: Gelenkige Verbindung
- 12: Federdämpfer
- 13: Gleitlager
- 14: Lagerbuchse
- 14a: Erstes Lagerbuchsenteil
- 14b: Zweites Lagerbuchsenteil
- 15: Abschnitt
- 16: Hülse
- 17: Absatz
- 18: Durchgangsbohrung
- 18a: Absatz
- 19: Sicherungsschraube
- 20: Verbindungsmittel
- 30: Lagersystem
- 31: Gleitlager
- 32: Lagerbuchse
- 32a: Erstes Lagerbuchsenteil
- 32b: Zweites Lagerbuchsenteil
- 33: Abschnitt
- 34: Verbindungsmittel
- 35: Lagersegment
- 36: Verbindungssegment
- 37: Abschnitt
- 38: Ringförmiges Element
- 39: Sprengring
- 40: Werkzeugeingriffsausnehmung

## Patentansprüche

1. Radaufhängung (1), umfassend zumindest einen Fahrwerklenker (3, 4), eine erste Spurstange (5) und eine zweite Spurstange (6), einen Umlenkhebel (7) sowie ein Lagersystem (10, 30), welches den Umlenkhebel (7), der die erste Spurstange (5) und die zweite Spurstange (6) miteinander verbindet, an dem zumindest einen Fahrwerklenker (3) lagert, **dadurch gekennzeichnet, dass** das Lagersystem (10, 30) als ein Gleitlager (13, 31) ausgebildet ist, welches von einem Lagerabschnitt (3a) des zumindest einen Fahrwerklenkers (3) aufgenommen ist, wobei in dem Gleitlager (13, 31) ein den Umlenkhebel (7) und den zumindest einen Fahrwerklenker (3) verbindendes Verbindungsmittel (20, 34) gelagert ist.

2. Radaufhängung (1) nach Anspruch 1, **dadurch gekennzeichnet, dass** das Gleitlager (13, 31) eine zweiteilige Lagerbuchse (14, 32) mit einem ersten Lagerbuchsenteil (14a, 32a) und einem zweiten Lagerbuchsenteil (14b, 32b) umfasst.

3. Radaufhängung (1) nach Anspruch 2, **dadurch gekennzeichnet, dass** das erste Lagerbuchsenteil (14a, 32a) und das zweite Lagerbuchsenteil (14b, 32b) gegeneinander vorgespannt sind.

4. Radaufhängung (1) nach Anspruch 2 oder 3, **dadurch gekennzeichnet, dass** das erste Lagerbuchsenteil (14a, 32a) und das zweite Lagerbuchsenteil (14b, 32b) jeweils an je einem Ende jeweils einen sich radial nach außen erstreckende Abschnitt (15) aufweisen, der an je einem Absatz (18a) im Lagerabschnitt (3a) anliegt.

5. Radaufhängung (1) nach einem der Ansprüche 1 bis 4, **dadurch gekennzeichnet, dass** die Lagerbuchse (14, 32) aus einem thermoplastischen Kunststoff besteht.

6. Radaufhängung (1) nach einem der Ansprüche 1 bis 5, **dadurch gekennzeichnet, dass** das Verbindungsmittel (20) eine Hülse (16) umfasst, die auf ihrer äußeren Mantelfläche einen im Wesentlichen mittig angeordneten umlaufenden Absatz (17) aufweist, sowie eine durch die Hülse (16) hindurchführbare Sicherungsschraube (19).

7. Radaufhängung (1) nach einem der Ansprüche 1 bis 5, **dadurch gekennzeichnet, dass** das Verbindungsmittel (34) einteilig ausgeführt ist und ein Lagersegment (35) und ein Verbindungssegment (36) aufweist.

8. Radaufhängung (1) nach Anspruch 7, **dadurch gekennzeichnet, dass** das Lagersegment (35) einen im Wesentlichen flanschförmigen Abschnitt (37) aufweist, welcher abschnittsweise an einem sich radial nach außen erstreckenden Abschnitt (33) des ersten Lagerbuchsenteils (32a) anliegt.

9. Radaufhängung (1) nach Anspruch 8, **dadurch gekennzeichnet, dass** auf das Lagersegment (35) auf seiner dem im Wesentlichen flanschförmigen Abschnitt (37) abgewandten Seite ein im Wesentlichen ringförmiges Element (38) aufbringbar ist, welches abschnittsweise an einem sich radial nach außen erstreckenden Abschnitt (33) des zweiten Lagerbuchsenteils (32b) anliegt.

## Claims

1. Wheel suspension (1), comprising at least one chassis link (3, 4), a first tie rod (5) and a second tie rod (6), a relay lever (7) and a bearing system (10, 30) which mounts the relay lever (7), which connects the first tie rod (5) and the second tie rod (6) to each other, on the at least one chassis link (3), **characterized in that** the bearing system (10, 30) is in the form of a plain bearing (13, 31) which is accommodated by a bearing portion (3a) of the at least one chassis link (3), wherein a connecting means (20, 34) connecting the relay lever (7) and the at least one chassis link (3) is mounted in the plain bearing (13, 31).

2. Wheel suspension (1) according to Claim 1, **characterized in that** the plain bearing (13, 31) comprises a two-part bearing bushing (14, 32) with a first bearing bushing part (14a, 32a) and a second bearing bushing part (14b, 32b).

3. Wheel suspension (1) according to Claim 2, **characterized in that** the first bearing bushing part (14a, 32a) and the second bearing bushing part (14b, 32b) are prestressed against each other.

4. Wheel suspension (1) according to Claim 2 or 3, **characterized in that** the first bearing bushing part (14a, 32a) and the second bearing bushing part (14b, 32b) each have, at each end, a portion (15) which extends radially outwards and lies on a shoulder (18a) in the bearing portion (3a).

5. Wheel suspension (1) according to one of Claims 1 to 4, **characterized in that** the bearing bushing (14, 32) is composed of a thermoplastic.

6. Wheel suspension (1) according to one of Claims 1 to 5, **characterized in that** the connecting means (20) comprises a sleeve (16) which, on its outer lateral surface, has an encircling shoulder (17) arranged substantially centrally, and a locking screw (19) which can be guided through the sleeve (16).

7. Wheel suspension (1) according to one of Claims 1 to 5, **characterized in that** the connecting means (34) is designed as a single part and has a bearing segment (35) and a connecting segment (36).

8. Wheel suspension (1) according to Claim 7, **characterized in that** the bearing segment (35) has a substantially flange-shaped portion (37) which lies in sections on a radially outwardly extending portion (33) of the first bearing bushing part (32a).

9. Wheel suspension (1) according to Claim 8, **characterized in that** a substantially annular element (38) can be applied to the bearing segment (35), on the side thereof facing away from the substantially flange-shaped portion (37), said substantially annular element (38) lying in portions on a radially outwardly extending portion (33) of the second bearing bushing part (32b).

## Revendications

1. Suspension de roue (1), comprenant au moins un bras de suspension (3, 4), une première barre d'accouplement (5) et une deuxième barre d'accouplement (6), un levier de renvoi (7) ainsi qu'un système de palier (10, 30) qui supporte le levier de renvoi (7), qui relie l'une à l'autre la première barre d'accouplement (5) et la deuxième barre d'accouplement (6), sur l'au moins un bras de suspension (3), **caractérisée en ce que** le système de palier (10, 30) est réalisé sous forme de palier lisse (13, 31) qui est reçu par une portion de palier (3a) de l'au moins un bras de suspension (3), un moyen de liaison (20, 34) reliant le levier de renvoi (7) et l'au moins un bras de suspension (3) étant supporté dans le palier lisse (13, 31).

2. Suspension de roue (1) selon la revendication 1, **caractérisée en ce que** le palier lisse (13, 31) comprend une douille palier en deux parties (14, 32) avec une première partie de douille palier (14a, 32a) et une deuxième partie de douille palier (14b, 32b).

3. Suspension de roue (1) selon la revendication 2, **caractérisée en ce que** la première partie de douille palier (14a, 32a) et la deuxième partie de douille palier (14b, 32b) sont précontraintes l'une contre l'autre.

4. Suspension de roue (1) selon la revendication 2 ou 3, **caractérisée en ce que** la première partie de douille palier (14a, 32a) et la deuxième partie de douille palier (14b, 32b) présentent chacune à chaque extrémité une portion respective (15) s'étendant radialement vers l'extérieur, qui s'applique contre un épaulement respectif (18a) dans la portion de palier (3a).

5. Suspension de roue (1) selon l'une quelconque des revendications 1 à 4, **caractérisée en ce que** la douille palier (14, 32) se compose d'un plastique thermoplastique.

6. Suspension de roue (1) selon l'une quelconque des revendications 1 à 5, **caractérisée en ce que** le moyen de liaison (20) comprend une douille (16) qui présente, sur sa surface d'enveloppe extérieure, un épaulement périphérique (17) disposé essentiellement centralement, ainsi qu'une vis de fixation (19) pouvant être guidée à travers la douille (16).

7. Suspension de roue (1) selon l'une quelconque des revendications 1 à 5, **caractérisée en ce que** le moyen de liaison (34) est réalisé d'une seule pièce et présente un segment de palier (35) et un segment de liaison (36).

8. Suspension de roue (1) selon la revendication 7, **caractérisée en ce que** le segment de palier (35) présente une portion essentiellement en forme de bride (37), qui s'applique en partie contre une portion (33) de la première partie de douille palier (32a) s'étendant radialement vers l'extérieur.

9. Suspension de roue (1) selon la revendication 8, **caractérisée en ce qu'**un élément essentiellement annulaire (38) peut être appliqué sur le segment de palier (35) sur son côté opposé à la portion essentiellement en forme de bride (37), lequel s'applique en partie contre une portion (33) de la deuxième partie de douille palier (32b) s'étendant radialement vers l'extérieur.
